# EUROPEAN PATENT SPECIFICATION

(11) **EP 1 985 085 B1**
(45) Date of publication and mention of the grant of the patent: **24.06.2009**
(21) Application number: 06706898.1
(22) Date of filing: 13.02.2006
(51) Int. Cl.: H04L 29/06

(54) **NETWORK ENTITY**
NETZWERKENTITÄT
ENTITÉ DE RÉSEAU

(43) Date of publication of application: 29.10.2008
(73) Proprietor: TELEFONAKTIEBOLAGET LM ERICSSON, 164 83 Stockholm (SE)
(72) Inventor: MONJAS LLORENTE, Miguel Angel, 28045 Madrid (ES); PALLARES LOPEZ, Miguel Angel, 28022 Madrid (ES)
(74) Representative: HOFFMANN EITLE
(86) International application number: PCT/EP2006/001286
(87) International publication number: WO 2007/093187

(56) References cited:
- WO-A-03/091861
- US-A1- 2004 215 824
- US-A1- 2005 188 056

## Description

### [Field of the Invention]

The present invention relates to a network entity for a network that is arranged to comprise resource hosting entities that host resources, where at least some of said resource hosting entities are arranged for offering hosted resources to other network entities upon receiving a resource request. The present application also relates to a method of controlling such a network entity.

### [Background of the Invention]

In the field of communication, networks are known in which user resource hosting entities are present, where at least some of said user resource hosting entities are arranged to offer the user resources to other network entities upon request. A user resource is any data relating to a particular user, where a user in turn is anything or anyone that can carry an identity and use the network. As such, a user can be a human being, a group of human beings, an organisation, an entity of the network, a group of entities of the network, etc. An entity within the meaning of the present application and claims is a system that provides a defined functionality, and it can therefore be a physical unit, like a server, network node, etc., or a distributed system, where a plurality of physical units together provide the given functionality.

The "hosting" of a resource means that the resource is held and possibly managed by the hosting entity. Examples of hosted user resources are personal information (such as name, address, etc.), financial information (such as credit card number, bank account, status, etc.), or any other information associatable with a user (e.g. calendar information indicating the schedule of a given user). The "offering" of hosted user resources means that these resources can not only be used by the entity hosting them, but can also be provided to other entities upon request. This means that user resources are shared.between entities of a network, which provides the advantage to the corresponding user that he need not consistently enter the same information into various entities when using the network. When a user logs on to a server in e.g. the Internet and identifies himself, the server can obtain certain user resources relating to said user from another network entity, for example a server for booking a hotel reservation can obtain credit card information from another server, such that the user does not have to enter that information.

Examples of the above-mentioned concept are the identity federation frameworks. An identity federation framework comprises a set of entities and a set of mechanisms which allow a plurality of these entities to share federated identity information of user between them. A more specific example is that of the "Liberty Alliance Project", which is a standardization forum for the standardization of identity federation frameworks. As the Liberty Alliance Project is known, a further description is not necessary here.

Document D=WO 03/091861 discloses a location entity that possesses user resources, said entity being instructed to acquire user resources that it does not hold. The acquiring step comprises a contact step and a response step wherein the requesting entity receives the requested user resources.

### [Object of the Invention]

The object of the present invention is to improve upon the previously described concept.

### [Summary of the Invention]

This object is solved by the subject matter of the independent claims of the present application. Advantageous embodiments are described in the dependent claims.

In accordance with an embodiment of the present invention, a network entity for a network is provided, where the network comprises user resource hosting entities and a mechanism such that at least some of the resource hosting entities may offer hosted user resources to other network entities, and this network entity comprises a request receiver for receiving user resource requests from other entities of the network, and comprises a request processor for processing user resource requests, where the request processor is capable of processing user resource requests relating to foreign user resources that are hosted by other entities than the network entity in question, and for providing said foreign user resources in response to the user resource requests.

The network entity as just described is a type of user resource proxy that is capable of offering foreign user resources hosted by other entities. In other words, if a given entity hosts a particular user resource, e.g., financial data of a user, then the network entity of the invention can act as a proxy for offering these user resources to other entities. This is useful in a number of different ways. For example, it is thereby possible to let the proxy hold a dedicated type of user resource, e.g., financial information. The proxy can then act as a gateway to such a type of user resource for a plurality of hosting entities, which both simplifies the traffic in the network and at the same time allows for the implementation of specific security mechanisms at the proxy, without having to provide the same security at all of the hosting entities.

Another advantage of the proxy of the invention is that user resources can be offered from hosting entities that themselves cannot (for whatever reason) offer the user resources. For example, it is possible that some user resource hosting entities are technically not capable of offering the user resources, e.g., because they are not able to operate as servers, but only as clients. An example of such a situation is if wireless communication devices, such as mobile phones, are present as entities in a network, but do not have the processing capacity or memory capacity to act as a network server in order to process user resource requests. In such a case, certain user resources hosted by the wireless communication device (e.g., calendar data associated with a user, personal identification information in a subscriber module, etc.) can be offered by means of the proxy network entity of the present invention, which is then preferably able to communicate with the wireless communication devices, in order to obtain the hosted user resources, and to offer and provide them to other network entities upon request. Another reason why some entities might not offer hosted user resources is for security reasons. This can, e.g., be the case if a particular entity (such as a mobile phone) is specifically associated with a particular user, such that data from the mobile phone can be readily associated with that particular user.

### [Brief Description of Figures]

Detailed embodiments of the present invention will now be described with respect to the enclosed figures, in which:
- Fig. 1: shows a schematic block diagram of a network entity according to an embodiment of the present invention;
- Fig. 2: shows a schematic block diagram of a network entity in accordance with an embodiment of the invention in conjunction with other network entities;
- Fig. 3: shows an example of entities in an identity federation framework;
- Fig. 4: shows a block diagram of a further embodiment of the present invention;
- Fig. 5: shows a block diagram of a further embodiment of the present invention; and
- Fig. 6: shows a flow chart of a method embodiment of the present invention.

### [Detailed Description of the Embodiments]

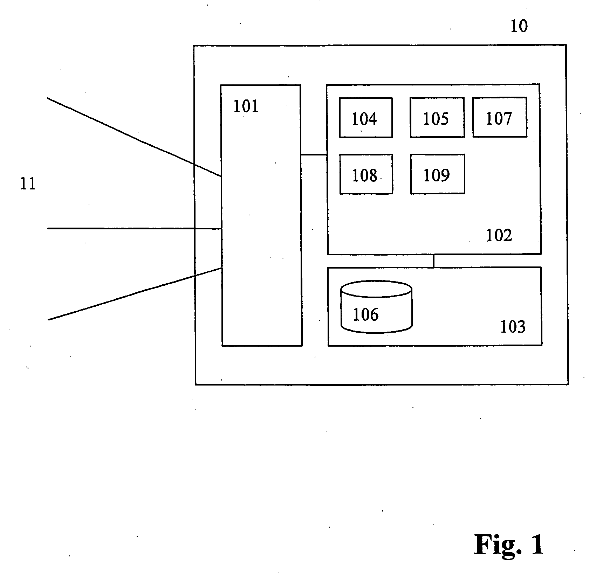

Fig. 1 shows a schematic diagram of a network entity 10 that embodies the concepts of the present invention. In the invention, an entity within the meaning of the present specification and claims can be a unit or a system of units that together provide a given functionality. In the example of Fig. 1, the network entity 10 is a network node comprising a transceiver part 101 for supporting a plurality of connections 11 towards a network. These are conventional elements and need not be described in further detail. The network entity 10 of Fig. 1 furthermore comprises a data processor 102 and a memory part 103. The data processor 102 comprises a request receiver 104 and a request processor 105. The request receiver 104 and request processor 105 can be provided as hardware, software, or any suitable combination of hardware and software, in order to provide the capability of receiving user resource requests from entities of the network (request receiver 104), and process user resource requests relating to foreign user resources hosted by other entities than the network entity and for providing these foreign user resources in response to the requests (request processor 105). As an example, the data processor 102 can be one or more programmable computer processors, and the request receiver 104 and request processor 105 can be implemented as computer code parts of computer programs running on the computer processor system. In such a case, these computer programs and further programs (such as an operating system, etc.) can be held in the memory part 103, as is known from convention network nodes.

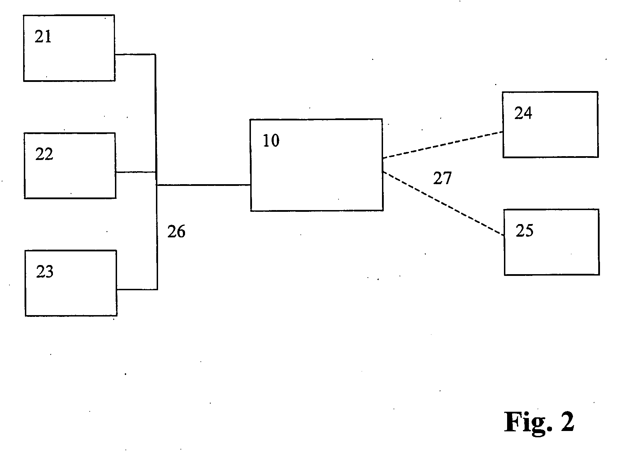

Fig. 2 shows the network entity 10 of Fig. 1 in connection with further network entities 21-25. The reference numerals 21-23 represent network entities that host given user resources and are capable of offering the user resources via network 26. For example, network 21 could be a server in a computer network, such as the Internet. Upon a specific user interacting with network entity 21, network entity 21 could contact network entity 23, in order to obtain a resource for said user, e.g., credit card information for the user, such that the user is not bothered with having to enter this information manually. As a consequence, network entity 21 sends a user resource request to network entity 23, where the request is processed and an appropriate answer is sent back. This procedure could comprise the exchange of security and/or validation information.

In the above example, it was assumed that the network entity 21 was informed of where to obtain the desired user resource. This can, e.g., be achieved by keeping appropriate information on users and associated user resources in a number of participating network entities. Naturally, other solutions are also possible, e.g., the provision of a dedicated entity for holding information on user resources. Such an example will be described further on.

In the embodiment of Fig. 2, the proxy network entity 10 is also connected to network 26, in order to receive user resource request from the entities 21-23. The example of Fig. 2 furthermore shows two entities 24, 25, which are assumed to be resource hosting entities, and which can communicate with the proxy network entity 10, such that the user resources hosted by entities 24, 25 can be offered via the proxy network entity 10. The communication along connections 27 can be the same as that over network 26, or can be different, e.g., involve a different technology and further intermediate entities and elements not shown in Fig. 2.

As such, the entities 24, 25 can be entities like the network entities 21-23, e.g., servers in network 26. However, instead of offering user resources hosted by them directly, the entities 24, 25 make use of the proxy network entity 10, such that the proxy network entity 10 offers the user resources hosted in entities 24, 25. It is also possible that entities 24, 25 offer their hosted user resources both themselves directly and via the proxy network entity 10.

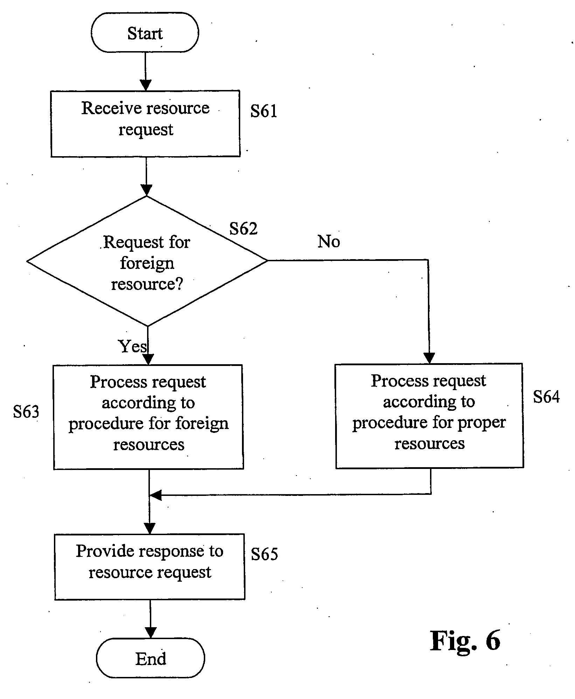

It is also noted that the proxy network entity 10 may be dedicated to exclusively offer foreign user resources, i.e., user resources hosted by other entities. But it is equally possible that the proxy network entity 10 is arranged in such a way that it offers foreign user resources and its own proper user resources, i.e., user resources hosted by proxy network entity 10 itself. Such an example will be described in connection with Fig. 6.

According to a preferred embodiment, the entities 24, 25 are such that they do not offer the user resources hosted by them, e.g., because they are technically not designed to act as servers. For example, according to a preferred embodiment, the entities 24, 25 are wireless communication devices, such as mobile phones. The dotted lines 27 in Fig. 2 indicate that the communication between entities 24, 25 and the proxy network entity 10 is not permanent.

The types of data hosted as user resources in entities 24, 25 as wireless communication devices and offered by proxy network entity 10 can be numerous types of information or attributes useful for the network entities 21-23. For example, such user resources can be:
the operating system type, operating system version, operating system patch level;
user interface;
installed applications and browsers;
installed application features;
installed hardware appliances (e.g., cameras);
audio codecs;
video codecs;
terminal model;
firmware version;
Java virtual machine version;
SIM features;
user interface preferences (such as language, etc.).

As a consequence, the device capabilities or configurations for a given wireless communication device can be offered as a user resource in response to appropriate user resource requests, using the proxy network entity 10. A wireless communication device can furthermore host information that relates to personal attributes of any user, such as privacy settings, wallet or payment attributes, preferences with regard to purchase activities, agendas, contact lists, etc. All such data can be offered as a user resource via the proxy network entity 10. This is very useful, as these attributes and other information can be made available on the basis of the known mechanisms for requesting offered resources, but without the entities 24, 25 having to be capable or willing to directly offer the resources. Namely, the proxy entity 10 acts on their behalf, and adheres to all the rules and conventions used for the regular resource offering and resource requesting entities 21- 23.

According to a preferred embodiment, the proxy network entity 10 has access to a foreign user resource database indicated by reference numeral 106 in Fig. 1. In the example of Fig. 1, the foreign user resource database 106 is shown as a part of the memory 103 of entity 10. However, the foreign user resource database 106 can also be separate from the entity 10. The foreign user resource database 106 comprises foreign user resources that can be offered by the proxy network entity 10. In accordance with this preferred embodiment, the request processor 105 is arranged for querying the foreign user resource database 103, in order to obtain requested foreign user resources.

As also shown in Fig. 1, if a foreign user resource database 106 is present, the network entity 10 is preferably also arranged to comprise a data base updater 107 (shown as a part of the data processor 102) for establishing a communication with a given entity hosting a given foreign user resource, for determining whether the given foreign user resource stored in the foreign user resource database 106 is identical to the given foreign user resource hosted by the entity with which communication is taking place, and updating the given foreign user resource in the foreign user resource database 106 associated with the entity with which communication is taking place, if the stored given user resource and hosted foreign user resource are not identical. In other words, based on a suitable or desirable triggering event (e.g., at regular intervals, or whenever the entity hosting foreign user resource, such as the entity 24, 25 in Fig. 2 log onto a given network, or if the proxy network entity 10 receives a request associated with user resources hosted by a given entity 24 or 25), a communication can be established between the proxy network entity 10 and the entity or entities hosting the foreign resources, in order to check whether the foreign user resources held in database 106 correspond to the actual foreign user resources hosted by the associated entity at that time. If the foreign user resources hosted by the entity have changed with respect to the foreign user resources held in the database 106, then the foreign user resources held in database 106 are over-written by the foreign user resources presently hosted by the entities 24 or 25. Naturally this concept also applies to the case in which there is no entry for a particular foreign user resource in the database 106. In this case, once the data base updater 107 obtains a foreign user resource, and it is determined that there is no corresponding entry in the database, such an entry is made.

By providing the foreign resource database 106, the proxy network entity 10 is capable of immediately responding to user resource requests that relate to foreign user resources hosted by other entities than the proxy network entity 10, such as the entities 24 or 25. This is one way of achieving that the proxy network entity 10 is capable of providing foreign user resources in response to associated requests. It is not necessary for the proxy network entity 10 to be able to contact the entities 24, 25 when receiving a request for user resources hosted by said entities 24, 25.

On the other hand, in addition to the provision of the database 106, or as an alternative, the request processor 105 can also be arranged to identify an entity hosting a particular foreign user resource (based on the user resource request for that particular foreign user resource), and to initiate communication with the identified entity, in order to obtain the desired particular foreign user resource. In other words, if e.g. the entity 21 sends a resource request to proxy network entity 10, which request relates to a user resource hosted by entity 24, the proxy network entity 10 can be arranged to initiate a communication with entity 24 after having received the user resource request from entity 21, in order to obtain the desired user resource from entity 24, and to then provide it to the requesting entity 21.

In any case, the entities hosting user resources that are being offered by the proxy network entity can effectively "hide" behind the proxy network entity 10. This can provide important security advantages.

It is noted that the identification of a hosting entity based on a user resource request for a particular foreign user resource can be done in any suitable or desirable way. For example, the proxy network entity 10 can hold a database or list that links specific foreign user resources (identified by an appropriate user resource identification in the user resource request) with an identifier of the entity hosting that user resource.

When combining the feature of having a foreign resource database 106 with that of arranging the request processor 105 to initiate communication with an entity hosting a requested foreign resource, then the following operation control method is possible. After having received a request for a particular foreign user resource, the proxy network entity 10 first establishes communication with the entity hosting said requested foreign user resource, and if the requested foreign user resource can be obtained from the contacted entity, this user resource is provided in response to the request. Moreover, after having obtained the requested foreign user resource, a comparison can be made with the corresponding entry in the foreign resource database 106, and in the event of a mismatch, the entry in the foreign resource database 106 is over-written by the just obtained user resource. If it is not possible to obtain the requested foreign user resource from the hosting entity (e.g., because the hosting entity is not connected or otherwise not available), then the foreign resource database 106 is queried and the corresponding entry is then output as a response to the user resource request.

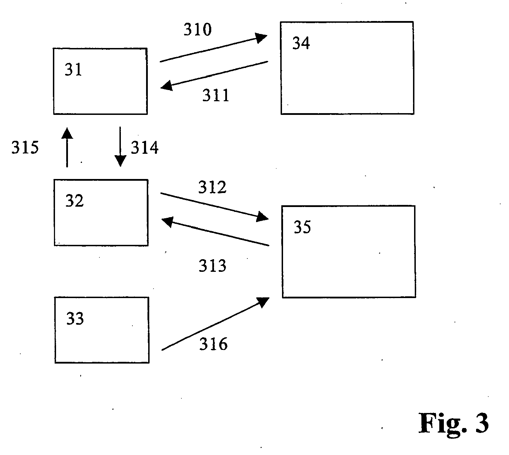

Fig. 3 shows an example of a network, in which a plurality of entities 31-33, which preferably host and offer user resources, interact with one another and with a dedicated identification entity 34 and a dedicated register entity 35. The register entity 35 is arranged for keeping user resource references to hosted user resources offered by one or more of the user resource hosting entities, and for providing the user resource references in response to requests for the user resource references. A user resource reference is an information that refers to a user resource, i.e. an information that allows a requester to obtain a particular user resource. It is therefore data that points to other data, in order that such other data can be obtained. The user resource reference can therefore be arranged in any suitable or desirable way for the network in which it is being used. For example, it can simply be a pointer to a certain location at which the resource can be found. Or it can be more elaborate and comprise a part that identifies the entity to which a request for the user resource is to be sent, and a further part that identifies the resource in question at that location to which the request is to be sent. For example, the user resource reference can have the form of a Universal Resource Indicator (URI). Naturally, the user resource reference can also comprise further information, e.g., can comprise a type information indicating the type of user resource it relates to (such type information could, e.g., be "personal information", "financial information", etc.).

If the entities 31-33 and 35 use a common identification scheme for users, then any one of the entities 31-33 can query the register entity 35 for a user resource reference based on a common user ID. On the other hand, if there is no common identification scheme (i.e. an identification scheme using common user identifiers for entities), then it is preferable to provide an identification entity 34, which is arranged for associating varying user identifications with one another, such that each entity can obtain the desired information using its own local user identification that is not shared by other entities. As an example, it is possible that the three entities 31-33 represent different Internet services, where one user has different user identifications in each of said services. The role of the identification entity 34 is to then associate the various user identifications.

Fig. 3 shows an information exchange between a number of entities, for explaining the role of the entities 34 and 35. In the example, it is assumed that entity 31 wishes to obtain a user resource for a given user interacting with entity 31. The register entity 35 is arranged in such a way that it holds one or more resource references for a user in association with an internal group identifier, which groups said one or more user resource references. The internal group identifier can also be seen as a type of internal user identification.

In the example of Fig. 3, entity 31 sends a request for identity information in message 310 to identification entity 34. The requester 310 contains a local user identification used by entity 31. For example, entity 31 provides a service for which the user A has a user identification X. In response (message 311) to receiving the request carrying X, the identification entity 34 provides an internal group identifier usable for accessing appropriate one or more user resource references in register entity 35. The obtaining of the internal group identifier can also be accomplished without an explicit request from entity 31; for example, the identification entity 34 can be entitled to provide single sign-on (SSO) for users accessing services 31, 32, 33, wherein service 31 could receive the internal group identifier of a user as a part of the authentication assertion received from identification entity 34 for said user. In keeping with the above example, the identification entity 34 could return an internal group identifier Y for user A. In accordance therewith, the entity 31 sends a request 312 to register entity 35, asking for a user resource reference based on the internal group identifier Y. Register entity 35 responds with message 313, which contains the requested resource reference. Then, using this resource reference, which indicates to entity 31 that a resource request is to be sent to entity 32, entity 31 sends the request for the indicated resource message 314 and receives a corresponding response in message 315.

As a further feature of the system of Fig. 3, arrow 316 indicates the sending of a resource reference update from a user resource hosting and offering entity 33 to the register entity 35. In other words, if, e.g., the resource type changes, or the identification of the resource used in entity 33 changes, then an appropriate update message 316 is sent to register entity 35, such that the user resource reference held in register entity 35 can be appropriately updated.

In the context of a system as shown in Fig. 3 that uses a register entity 35 of the described kind, it is preferable that the proxy network entity of the present invention comprises a registration processor 108 (see Fig. 1) arranged for registering user resource references to foreign user resources in the register entity 35, where the user resource references to foreign user resources indicate the proxy network entity 10 as the entity for receiving user resource requests for the referenced foreign user resources.

In other words, if a register entity is provided, then it is preferable that the proxy network entity is capable of registering the foreign user resources that it offers with the register entity, where the user resource references to said foreign user resources point towards the proxy network entity, such that if one of the network entities (such as the entities 31-33 shown in Fig. 3) request a user resource hosted by one of the entities hidden behind proxy network entity 10, then the associated user resource request is sent to the proxy network entity 10, because the user resource reference in register entity 35 points towards the proxy network entity.

In a situation in which in addition to the register entity 35 an identification entity 34 is used, it is preferable that the proxy network entity 10 comprises an obtainer 109 for obtaining from identification entity 34 the internal group identifier based on an external group identifier as used by the entity querying the identification entity, e.g., an external user identifier. The registration processor 108 is then furthermore arranged for registering the user resource references to foreign user resources in the register entity 35 using the obtained internal group identifier.

In other words, the proxy network entity 10 is preferably arranged in such a way that it can contact the identification entity 34, in order to obtain group identification information (e.g., a user identification internally used by the register entity 35), in order to be able to register foreign user resources in the register entity 35 using the appropriate group identifier. It is furthermore preferable that the proxy network entity 10 is arranged for updating established user resource references in register entity 35 that relate to foreign user resources offered by the proxy network entity 10 by using the appropriate internal group identifier of the register entity 35.

The Identity Web Services Framework of the Liberty Alliance Project is an example of a concept providing an arrangement as shown in Fig. 3. In the context of the Liberty Alliance Project, the entities 31-33 are Service Providers (SP), which may provide or consume resources, i.e. act as Web Service Providers (WSP) or Web Service Consumers (WSC). The identification entity 34 is an Identity Provider (IDP), and the register entity 35 is a Discovery Service (DS) that allows one SP, acting as WSC, to access a second SP, acting as WSP, that holds a wanted resource. The resource reference held by the register entity is then referred to as a Resource Offering (RO) held in the DS server. It is noted that the response 311 sent from the identification entity 34 to a requesting entity 31 in Fig. 3 can also be seen as a specific type of Resource Offering within the context of the Liberty Alliance Project, namely a reference that allows the requesting entity to query the DS server, for obtaining a resource offering of a given user.

As the concepts of the Identity Web Services Framework and the Liberty Alliance Project are known in the art, a further description is not necessary here.

The above-described concepts of the present invention are preferably applied in the context of the Identity Web Services Framework of the Liberty Alliance Project. As such, a number of examples will now be described for a corresponding system operating according to the Identity Web Services Framework. In the context of the Liberty Alliance Project, user agents and devices that send or consume protocol messages specified in the ID-WSF (Identity Web Services Framework) or ID-FF (Identity Federation Frameworks) specifications are called Liberty-enabled User Agents Devices (LUAD). The defining characteristics of a LUAD is that it is closely associated with one user (or a small number of users, such as a household), and the LUAD therefore represents that user. This is very different from a website that acts as a Web Service Consumer (WSC) or a Web Service Provider (WSP), which may each represent thousands of users. In addition, a LUAD may often be technically arranged such that it is not a highly-available HTTP server, unlike website-based WSCs and WSPs.

It is noted that the term 'Web Service Provider' is used for servers that provide a service to other network entities (such as the entity 32 described in the example Fig. 3), whereas the term 'Web Service Consumer' relates to an entity that requests and uses a services, such as the entity 31 described in the example of Fig. 3.

Within the context of the Liberty Alliance Project, it is considered to not be desirable that LUADs acting as WSPs register in a DS, because such registration would require that the LUAD has a provider ID. A provider ID is a reference that points towards the identified provider, i.e., the provider ID is an identification that implicates where to send a request for a resource. Because a LUAD corresponds to a particular user owning that LUAD, the assignment of a provider ID to the LUAD might compromise the privacy of the user.

The presently described embodiment is proposed to provide a network-based proxy that enables an access to LUADs, i.e., a specific embodiment of the general proxy network entity 10 described in connection with Figs. 1 and 2, applied to the context of the Liberty Alliance Project. This embodiment of the proxy network entity 10 will in the following also sometimes be referred to as a Terminal Attributes and Capabilities Gateway (TACG), as its purpose is primarily to allow WSCs access to attributes and capabilities hosted by terminals (e.g., mobile telephones) in a type of gateway function. The TACG preferably has one or more of the following features:
- registering resource offerings in the DS that represent the resources hosted in the terminal, where the end-point of such resource offerings (i.e. the destination where to send a resource request) is the TACG itself, and keeping a record associating a resource identifier included in the resource offering and one or more predetermined user identifiers (such as the MSISDN number, the IMSI, etc.) that the resource corresponds to;
- communicating with the terminal, in order to determine the resources it hosts (e.g., when the terminal registers with its own network), and preferably also when a WSC requests resources hosted by the terminal;
- determining whether the terminal is active/switched on prior to communicating with it; and
- feeding a network-based database with the values of the retrieved resources (for off-line access).

The TACG handles the registration of LUADs and other terminals attributes (an attribute being an example of a user resource) in the DS. LUADs are not registered in themselves, but using resource offerings created ad hoc and including information that on the one hand lets any WSC receiving the resource offering direct its resource request to the TACG, and including information such that the TACG can then determine the requested resource. Preferably this includes information allowing the TACG to identify the terminal hosting the resource (e.g. to identify the MSISDN number, the IMSI, etc.), such that the hosting terminal can be contacted. As a consequence, the discovery (i.e. the recognition of the offered resources) of the LUADs can be performed following the usual ID-WSF procedures, where it is, however, to be noted that this is performed through a TACG acting as a proxy network entity. In other words, this has the advantage that the established procedures of the ID-WSF may be retained, but at the same time the privacy of the LUADs is guarded. Furthermore, such LUADs that do not have any server capability can nonetheless offer resources (e.g., present their attributes) by making use of the TACG acting as a proxy network entity.

If a variety of user IDs is being used, then the TACG preferably has the capability to query the IDP, in order to find out the user's DS resource ID (a DS resource ID is an example of an internal group identifier used for associating one or more user resource references). The TACGs may use the ID-FF NameIdentifierMapping protocol, which is done in such a way that, for example, the MSISDN number is sent to the IDP, and the associated DS resource ID is received in response.

When a WSC wishes to access a resource hosted by a terminal, the DS supplies a corresponding resource offering (i.e. an example of a user resource reference) that comprises an information indicating that a resource request is to be sent to the TACG. Next the WSC can then access the TACG (i.e., send a resource request to the TACG), which in turn can then provide the requested resource, or more preferably identifies the terminal hosting the requested resource (e.g., determines the MSISDN number of the terminal hosting the requested resource) and then communicates with the identified terminal, in order to retrieve the requested resource. The TACG can then provide the retrieved resource to the WSC, and possibly additionally update the network-based database with the retrieved results.

The communication between the TACG and the LUADs can be done in any suitable or desirable way. For example, it can be done using PAOS, which stands for "Reverse HTTP Binding for SOAP" and has been suggested within the Liberty Alliance Project. SOAP stands for "Simple Object Access Protocol", and is a protocol for accessing a Web Service. It is an XML (EXtensible Mark-up Language) based protocol to let applications exchange information for HTTP (Hypertext Transfer Protocol). It is platform and language independent. The usual HTTP binding for SOAP in Liberty ID-FF maps SOAP requests to HTTP requests (and SOAP responses to HTTP responses). However, some devices, like wireless communication devices, may not be able to operate as an HTTP server (e.g. due to memory limitations, power limitations, or because such devices are not generally permanently addressable or reachable from the Internet). At the same time, HTTP clients are typically available in such devices. For this reason, PAOS was introduced, as it consists in a HTTP binding for the transport of SOAP requests on top of HTTP responses (and SOAP responses on top of HTTP requests).

PAOS defines two message exchange patterns, a request-response pattern and a response pattern. In the request-response pattern, the PAOS enabled user agent makes a HTTP request to which the HTTP server responds with a SOAP request message. The SOAP processor at the user agent then constructs a SOAP response message which is sent as the body of a second HTTP request. The response to this second HTTP request typically is normal content.

The response pattern consists of an HTTP request to which the HTTP server responds with a SOAP response message, i.e. a SOAP message to which the sender does not expect a response. To indicate that it supports PAOS, a user agent may include an HTTP header that indicates the services offered by the user agent.

An alternative or additional way of communicating between the TACG and a LUAD is to use WAP (Wireless Application Protocol) Push. WAP Push is a set of specifications that introduces a means to deliver information to a device without a user request. WAP Push is used by a number of different systems, such as MMS (Multimedia Message Service), OMA (Open Mobile Alliance) email notification or OMA device management to reach a mobile terminal. It is therefore basically well-known, such that a lengthy description is not necessary. The basic scheme is such that when a mobile terminal user is to be notified (e.g., of the reception of a message), it receives a push notification, and next the terminal accesses the corresponding network node to download the content. In other words, the actual content is not carried over the push protocol, just a notification for the appropriate application client in the terminal to download the content. The basic WAP push architecture comprises a Push Initiator (PI) that requests the sending of a push message to a given terminal by means of a PAP (Push Access Protocol) message sent to a Push Proxy Gateway (PPG). The PPG performs the task of authenticating the PI, performing protocol translation from PAP to OTA, and terminal address resolution. The PPG receives PAP messages that usually identify the terminal by means of the MSISDN number. The PPG is able to perform an address resolution operation from MSISDN to a terminal IP address. The PPG is furthermore capable of issuing OTA messages to the terminal, where OTA stands for "Push-Over-The-Air Protocol", which is a protocol for sending push content to the terminal. The protocol can be connection-oriented or connectionless.

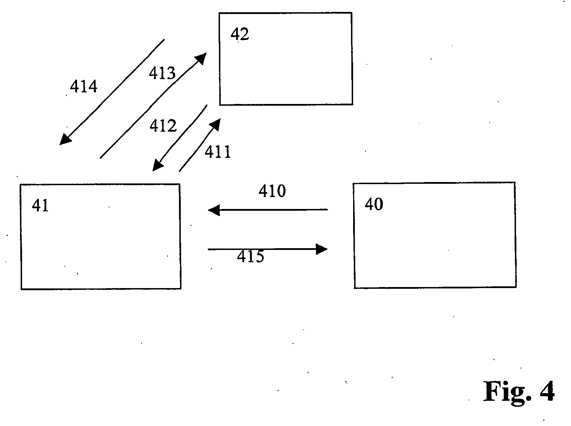

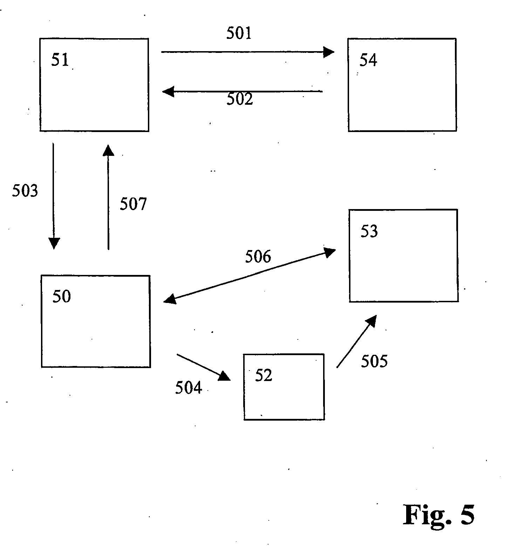

Using the just described features and examples, a number of message flows in a corresponding system will now be described with reference to Figs. 4 and 5.

Fig. 4 relates to the case of registering attributes hosted in a LUAD (e.g., a mobile terminal) with a discovery service (DS) via the TACG. Fig. 4 shows a LUAD 40 (as an example of an entity hosting certain user resources and whishing to share these with other entities), a TACG 41 (as an example of a proxy network entity), and a DS/IDP server 42 (as an example of a register entity and an identification entity, which are here provided by a common server).

It is noted that although a LUAD can basically play the role of a WSP (e.g., an Attribute Provider) in the standard Liberty Discovery Service, it would require a provider ID, in order to publish its offered resources in the DS. However, as already mentioned, this would compromise the privacy of the user associated with the LUAD, because all interactions between WSCs and the LUAD would allow observers to correlate different service invocations to the LUAD.

In the embodiment of Fig. 4 it is shown that the LUAD 40 publishes its offered resources via the TACG 41, e.g., using the previously described PAOS. In this way, the TACG at the gateway is the entity that actually performs the registering in the DS. This avoids another great disadvantage that would occur if a LUAD itself published its resources in the DS. Namely, in such a case the LUAD would have to register with the DS each time that it logs into its respective network. By providing the proxy 41, the LUAD does not need to perform any kind of registration every time that it logs on. The offered resources remain in the DS, and are managed by the TACG, even if the LUAD is disconnected. If a communication between the TACG and the LUAD is necessary, then this can be done under control of the TACG, i.e., it can keep a record of the LUAD's reachability status. On the other hand, the LUAD can remain in control of when and how to up-date the offered resources (e.g., due to changes, removals, additions, etc.) by appropriately communicating with the TACG.

As shown in Fig. 4, upon logging on, the LUAD 40 can send a HTTP request following, e.g., the PAOS response pattern, see message 410. This request may contain a list of the resources hosted by the LUAD and to be offered. The LUAD sends the HTTP request to the preconfigured web address of the TACG, such that the TACG can initiate a registration with the DS. The TACG can then optionally identify the terminal by querying, e.g., a network-based session manager (not shown in Fig. 4). It is mentioned that the network-based session manager could be provided in the server 42. The TACG 41 preferably has access to a database of user resources, and can therefore verify if there is a mismatch between the list of user resources to be offered and the list that is kept for the given user identifier (e.g., the given MSISDN number). If there is a mismatch, the resource reference registered in the DS would have to be up-dated, e.g., by registering new resources or removing old ones. In order to be able to register a resource offering, the TACG can create a resource ID and link it internally to the MSISDN number of the user. Optionally, the list of resources to be offered can also be linked to the MSISDN number. Message 415 shown in Fig. 4 is the HTTP response sent as a part of the PAOS response pattern.

The TACG then obtains a DS resource ID to register a resource offering. The DS resource ID is an example of the internal group identifier used in the DS in order to group resource offering (user resource references) appropriately, e.g., according to users. As such, the DS resource ID can be seen as an internal identifier by which a user is known at the DS. To obtain the DS resource ID, the NameIdentifierMapping protocol can be used for querying 411 the IDP in server 42, where the MSISDN number is used as an input of the query.

In response to the query, the TACG receives the relevant DS resource ID, see message 412. The TACG.can then issue a DiscoveryUpdateRequest message 413, including the DS resource ID retrieved previously and the information on resources offered by the LUAD 40. The DS in server 42 then responds with an appropriate acknowledgement message 414.

In the previous example, the LUAD 40 initiated a registration with the DS by appropriately signalling to the TACG 41. However, it is noted that this is just an example, and it is equally possible that the TACG 41 remains in full control of the registration procedure with the DS, e.g., by in a first step communicating with the LUAD 40, in order to determine the present status of user resources to be offered, and then at a later point in time performing a determination whether or not a registration update with the DS is necessary. It can then perform such a registration update at its own volition. It can include a random resource ID and link it internally to the MSISDN of the user.

Fig. 5 shows an example, in which a WCS requests access to user resources hosted by a LUAD. In Fig. 5, reference numeral 50 describes a TACG, 51 describes an entity acting as a Web service consumer, 54 describes a server comprising a DS and IDP, 53 relates to a LUAD and 52 to a push proxy gateway (PPG).

In the example, it is assumed that the entity 51 acting as a WSC is in possession of the DS resource ID associated with the user of LUAD 53, such that entity 51 can send a DS Look-up Request 501 to the DS in server 54. This request includes the user's DS resource ID, and possibly further information, such as a service type indicator of one or more user resources as may be hosted in the user's terminal 53. The DS in server 54 then retrieves the relevant resource offerings (user resource references), optionally applies authorization policies and sends a corresponding DS Look-up Response message 502. Upon reception of the resource offering, the WSC sends an attribute query 503 to the TACG 50. The TACG 50 identifies the requested resource (e.g., from an included resource ID) and identifies the corresponding LUAD. In other words, the associated MSISDN number is determined from the resource identification (e.g., based on a corresponding list held by TACG), and issues a PAP message 504 containing the user's identification (e.g., MSISDN number) and a URL that points to the TACG 50.

Upon reception of the PRP message 504, the PPG 52 (e.g., provided by a WAP gateway) determines the IP address of the terminal 53 from the provided MSISDN. It is assumed that the PPG has previously received a forwarded RADIUS Accounting Start message containing the, relationship between the MSISDN and IP address. Therefore, it is able to locate the terminal 53 and send a PAP message to it. If the PPG 52 has not received such a message (or the message does not contain the appropriate mapping), it may query a network session manager (not shown in Fig. 5) to find out the IP address of the user. The PPG 52 then sends an OTA message 505 to the terminal 53, including the URL which points to the TACG. This message could furthermore include an indication regarding the type of notification, such that the terminal 53 knows which action it has to perform.

The terminal 53 acting as a LUAD then begins a communication 506 with the entity 50 acting as a TACG, which may comprise sending a HTTP request to the provided URL, including an indication of the user resources that it hosts and can provide. This can be done following the PAOS specifications with the request-response pattern. In a corresponding HTTP response, the entity 50 acting as TACG can request the user resources that the entity 51 acting as WCS originally requested. The terminal 53 acting as LUAD can then send the requested user resources in a new HTTP request, whereupon the entity 50 acting as TACG can send the HTTP response in accordance with the PAOS request-response pattern.

The entity 50 acting as TACG can then assemble an Attribute Query Response 507 containing the requested attributes as provided by the terminal 53 in the communication 506. As this point, the entity 50 acting as TACG might store the received attributes, so that when the terminal 53 is disconnected, the last available attributes can be provided. In other words, if in response to the PAP message 504, the entity 50 receives an error indication from the entity 52 acting as PPG, then it can obtain the requested attributes from its associated user resource database. Naturally, as an alternative, the entity 50 can also be arranged to in such a case provide an error message in response to the attribute query 503 from entity 51.

It is noted that further entities and queries may be involved. For example, if the desired user resource is a capability of the terminal 53 (e.g., the presence of a specific codec or specific operating system), then it is possible that the entity 51 acting as a WSC or the server 54 acting as DS could query a vendor terminal capabilities database, i.e., a database that contains information on different configurations or capabilities supported by terminals produced by a vendor. From the response of the vendor terminal capabilities database, it can be determined whether the requested attribute can at all be provided by the terminal 53. Only if it is possible, will the procedure for accessing the terminal outlined in Fig. 5 be conducted.

The entity 50 acting as TACG should preferably be able to keep a session with the terminal 53. This simplifies the correlation between the request 503 from the entity 51 acting as WSC and the LUAD request that starts a PAOS dialogue sent in communication 506. For this purpose, a session identifier may be included in messages 504, 505, and in communication 506. It can be carried as a specific attribute or can be included in the URL that was transmitted in messages 504 and 505.

If terminal 53 is a mobile terminal, then an error situation can occur if the terminal 53 is switched off. As already described previously, the entity 50 acting as TACG contacts the entity 52 acting as PPG to deliver a notification message (message 504). If no session is available, the entity 52 acting as PPG will return an error message. Then, the entity 50 acting as TACG could perform an appropriate error processing, e.g., return an error message to entity 51, or return a stored value from the local user resource database.

In connection with the previous embodiments described in Figs. 1 to 5, the invention has been described in terms and embodiments relating to the function of the inventive proxy network entity as shown, e.g., as reference numeral 10 in Fig. 1. In correspondence to the described functionalities, the present invention can also be embodied in terms of a method of controlling a proxy network entity. As such, the elements 104, 105, 107, 108, or 109 shown as parts of the data processor 102 in Fig. 1 can also be embodied as method elements of a control method (e.g., as computer program code parts). Therefore, the present invention can also be embodied in the form of a computer program product comprising a computer program for executing an inventive control method when run on a programmable network entity.

Fig. 6 shows a flowchart of a method embodiment of the present invention. The method shown in Fig. 6 can, e.g., be run on a network entity as shown in Fig. 1. In the example of Fig. 6, it is assumed that the network entity hosts its own proper resources as well as providing access to foreign resources hosted by other entities. In a first step S61, a resource request is received. In step S62, it is determined whether the received request is for a foreign resource or for a proper resource hosted by the network entity itself. If the request is for a foreign resource, the procedure goes to step S63, in which a procedure for processing foreign resource requests is conducted. On the other hand, if the request is for a proper resource, a corresponding procedure for processing requests for proper resources is conducted in step S64. Thereafter, an appropriate response is provided to the resource request in step S65.

The procedure conducted in step S63 can be anyone of the procedures for handling foreign user resource requests described with respect to the proxy network entity or TACG in Figs. 1 to 5.

Another application of the concept of the present invention is in the field of handling user profile data in a centralized manner. For example, 3GPP specification 23.240 V6.7.0 discloses a functional entity referred to as a Generic User Profile (GUP) server, which provides a single point of access to user profile data of a particular user of a telecommunications system. The GUP server interfaces with a plurality of GUP data repositories that store copies of one or several profile components. The functionality of the proxy network entity of the present invention can also be applied in a centralized profile handling scenario of the GUP server concept. Namely, a proxy network entity could be introduced, which is arranged to behave towards the GUP server as a further GUP data repository. At the same time, it could hide that the user profile data that it provides to the GUP server is obtained from (or possibly set and/or modified in) a plurality of foreign resource hosting entities, some or all of which could be user terminals, such as mobile communication devices.

The capabilities of the proxy network entity for obtaining foreign user resources hosted by other entities can thus simplify the design of resource hosting entities, such as the GUP data repositories, since the communication between the proxy network entity and the resource hosting entities can be accomplished by using any of the already implemented protocols, such as WAP or PAOS.

The present invention has been described with respect to a number of detailed embodiments. These serve to provide a better understanding of the present invention, but are not intended to be limiting. Much rather, the scope of protection is defined by the appended claims. Reference numerals in the claims have no limiting effect and only serve to make the claims easier to read.

## Claims

1. A network entity (10) for a network that is arranged to comprise user resource hosing entities that host user resources, at least some of said user resource hosting entities being arranged for offering said hosted user resources to other network entities upon receiving a user resource request, and wherein said network comprises a register entity (35) arranged for keeping user resource references to hosted user resources offered by one or more of said user resource hosting entities and for providing said user resource references in response to requests for said user resource references, said network entity comprising:
a request receiver (104) for receiving user resource requests from entities of said network,
a request processor (105) for processing user resource requests relating to foreign user resources hosted by other entities than said network entity, and for providing said foreign user resources in response to said user resource requests, and
a registration processor (108) arranged for registering user resource references to foreign user resources in said register entity, wherein said user resource references to foreign user resources indicate said network entity as the entity for receiving user resource requests for the referenced foreign user resources.

2. The network entity (10) of claim 1, further comprising a foreign user resource data base (106) comprising said foreign user resources, wherein said request processor is arranged for querying said foreign user resource data base.

3. The network entity of claim 2, further comprising a data base updater (107) arranged for communicating with a given entity hosting a given foreign user resource, determining whether the given foreign user resource stored in said foreign user resource data base is identical to the given foreign user resource hosted by the entity with which communication is taking place, and updating the given foreign user resource in said foreign user resource data base associated with said entity with which communication is taking place if said stored given foreign user resource and hosted foreign user resource are not identical.

4. The network entity (10) of one of claims 1 to 3, wherein, based on a user resource request for a particular foreign user resource, said request processor is arranged to identify an entity hosting said particular foreign user resource, and to initiate communication with said identified entity in order to obtain said particular foreign user resource.

5. The network entity (10) of one of claims 1 to 4, wherein said register entity (35) is arranged for associating one or more user resource references with an internal group identifier internal to said register entity, and said network furthermore comprises an identification entity (34) arranged for associating each of said internal group identifiers with one or more external group identifiers, and for providing a particular internal group identifier in response to receiving a particular external group identifier associated with said particular internal group identifier, said network entity furthermore comprising:
an obtainer for obtaining from said identification entity an internal group identifier based on an external group identifier, where said registration processor is furthermore arranged for registering said user resource references to foreign user resources in said register entity using said obtained internal group identifier.

6. The network entity (10) of claim 5, wherein said external group identifier is a user identifier.

7. The network entity (10) of one of claims 1 to 6, wherein said entities hosting said foreign user resources are wireless communication devices.

8. The network entity (10) of claim 7, further comprising a communication part for conducting a communication with said wireless communication devices using one or both of WAP Push and PAOS.

9. The network entity (10) of one of claims 1 to 8, wherein said network is arranged in accordance with and said network entity adheres to the specifications of the Identity Web Services Framework of the Liberty Alliance Project.

10. A method of controlling a network entity (10) for a network that is arranged to comprise user resource hosting entities that host user resources, at least some of said user resource hosting entities being arranged for offering said hosted user resources to other network entities upon receiving a user resource request, and wherein said network comprises a register entity (35) arranged for keeping user resource references to hosted user resources offered by one or more of said user resource hosting entities and for providing said user resource references in response to requests for said user resource references, said method comprising:
receiving user resource requests from entities of said network,
processing user resource requests relating to foreign user resources hosted by other entities than said network entity,
providing said foreign user resources in response to said user resource requests, and
said method furthermore comprising registering user resource references to foreign user resources in said register entity, wherein said user resource references to foreign user resources indicate said network entity as the entity for receiving user resource requests for the referenced foreign user resources.

11. The method of claim 10, further comprising querying a foreign user resource data base (100) comprising said foreign user resources.

12. The method of claim 11, further comprising communicating with a given entity hosting a given foreign user resource, determining whether the given foreign user resource stored in said foreign user resource data base is identical to the given foreign user resource hosted by the entity with which communication is taking place, and updating the given foreign user resource in said foreign user resource data base associated with said entity with which communication is taking place if said stored given foreign user resource and hosted foreign user resource are not identical.

13. The method of one of claims 10 to 12, further comprising identifying an entity hosting a particular foreign user resource based on a user resource request for said particular foreign user resource, and initiating communication with said identified entity in order to obtain said particular foreign user resource.

14. The method of one of claims 10 to 13, wherein said register entity (35) is arranged for associating one or more user resource references with an internal group identifier internal to said register entity, and said network furthermore comprises an identification entity arranged for associating each of said internal group identifiers with one or more external group identifiers, and for providing a particular internal group identifier in response to receiving a particular external group identifier associated with said particular internal group identifier, said method furthermore comprising:
obtaining from said identification entity an internal group identifier based on an external group identifier, and registering said user resource references to foreign user resources in said register entity using said obtained internal group identifier.

15. The method of claim 14, wherein said external group identifier is a user identifier.

16. The method of one of claims 10 to 15, wherein said entities hosting said foreign user resources are wireless communication devices.

17. The method of claim 16, comprising conducting a communication with said wireless communication devices using one or both of WAP Push and PAOS.

18. The method of one of claims 10 to 17, wherein said network is arranged in accordance with and said network entity adheres to the specifications of the Identity Web Services Framework of the Liberty Alliance Project.

19. A computer program product comprising a computer program which, when run on a programmable network entity, adapts the programmable network entity to execute the method of one of claims 10 to 18.

## Patentansprüche

1. Netzwerkeinheit (10) für ein Netzwerk, das angeordnet ist, Benutzerressourcenhosteinheiten zu umfassen, die Benutzerressourcen hosten, wobei zumindest einige der Benutzerressourcenhosteinheiten angeordnet zum Anbieten der gehosteten Benutzerressourcen an andere Netzwerkeinheiten auf Empfang einer Benutzerressourcenanfrage hin angeordnet sind, und wobei das Netzwerk eine Registriereinheit (35) umfasst, die zum Beibehalten von Benutzerressourcenreferenzen zu gehosteten Benutzerressourcen, die von einer oder mehrerer der Benutzerressourcenhosteinheiten angeboten werden und zum Bereitstellen der Benutzerressourcenreferenzen in Reaktion auf Anfragen nach den Benutzerressourcenreferenzen angeordnet ist, wobei die Netzwerkeinheit umfasst:
einen Anfrageempfänger (104) zum Empfangen von Benutzerressourcenanfragen von Einheiten des Netzwerkes,
einem Anfrageverarbeiter (105) zum Verarbeiten von Benutzerressourcenanfragen, die Fremdbenutzerressourcen betreffen, die von anderen Einheiten als der Netzwerkeinheit gehostet werden und zum Bereitstellen der Fremdbenutzerressourcen in Reaktion auf die Benutzerressourcenanfragen, und
einen Registrierungsverarbeiter (108), der zum Registrieren von Benutzerressourcenreferenzen zu Fremdbenutzerressourcen in der Registriereinheit angeordnet ist, wobei die Benutzerressourcenreferenzen zu Fremdbenutzerressourcen die Netzwerkeinheit als die Einheit zum Empfangen von Benutzerressourcenanfragen für die referenzierten Fremdbenutzerressourcen anzeigen.

2. Netzwerkeinheit (10) nach Anspruch 1, weiter mit einer Fremdbenutzerressourcendatenbank (106) mit den Fremdbenutzerressourcen, wobei der Anfrageverarbeiter angeordnet zum Abfragen der Fremdbenutzerressourcendatenbank ist.

3. Netzwerkeinheit nach Anspruch 2, weiter mit einem Datenbankaktualisierer (107), der zum Kommunizieren mit einer gegebenen Einheit angeordnet ist, die eine gegebene Fremdbenutzerressource hostet, zum Bestimmen, ob die gegebene Fremdbenutzerressource, die in der Fremdbenutzerressourcendatenbank gespeichert ist, identisch zu der gegebenen Fremdbenutzerressource ist, die von der Einheit gehostet wird, mit der eine Kommunikation stattfindet, und zum Aktualisieren der gegebenen Fremdbenutzerressource in der Fremdbenutzerressourcendatenbank, die mit der Einheit verknüpft ist, mit der eine Kommunikation stattfindet, falls die gespeicherte, gegebene Fremdbenutzerressource und gehostete Fremdbenutzerressource nicht identisch sind.

4. Netzwerkeinheit (10) nach einem der Ansprüche 1 bis 3, wobei, basierend auf einer Benutzerressourcenanfrage nach einer bestimmten Fremdbenutzerressource der Anfrageverarbeiter angeordnet ist, eine Einheit zu identifizieren, die die bestimmte Fremdbenutzerressource hostet und eine Kommunikation mit der identifizierten Einheit zu initiieren, um die bestimmte Fremdbenutzerressource zu erhalten.

5. Netzwerkeinheit (10) nach einem der Ansprüche 1 bis 4, wobei die Registriereinheit (35) angeordnet zum Verknüpfen einer oder mehrerer Benutzerressourcenreferenzen mit einem internen Gruppenidentifikator ist, der intern für die Registriereinheit ist und das Netzwerk darüber hinaus eine Identifikationseinheit (34) umfasst, die zum Verknüpfen jedes der internen Gruppenidentifikatoren mit einem oder mehreren externen Gruppenidentifikatoren ist und zum Bereitstellen eines bestimmten internen Gruppenidentifikators in Reaktion auf Empfangen eines bestimmten externen Gruppenidentifikators, der mit dem bestimmten, internen Gruppenidentifikator verknüpft ist, wobei die Netzwerkeinheit darüber hinaus umfasst:
einen Erfasser zum Erfassen von der Identifikationseinheit eines internen Gruppenidentifikators basierend auf einem externen Gruppenidentifikator, wobei der Registrierungsverarbeiter darüber hinaus zum Registrieren der Benutzerressourcenreferenzen zu Fremdbenutzerressourcen in der Registereinheit unter Verwendung des erfassten internen Gruppenidentifikators angeordnet ist.

6. Netzwerkeinheit (10) nach Anspruch 5, wobei der externe Gruppenidentifikator ein Benutzeridentifikator ist.

7. Netzwerkeinheit (10) nach einem der Ansprüche 1 bis 6, wobei die Einheiten, die Fremdbenutzerressourcen hosten, drahtlose Kommunikationsgeräte sind.

8. Netzwerkeinheit (10) nach Anspruch 7, weiter mit einem Kommunikationsteil zum Durchführen einer Kommunikation mit den drahtlosen Kommunikationsgeräten unter Verwendung von einem oder beidem von WAP-Push und PAOS.

9. Netzwerkeinheit (10) nach einem der Ansprüche 1 bis 8, wobei das Netzwerk gemäß den Spezifikationen des Identity Web Services Framework des Liberty Alliance Project angeordnet ist und die Netzwerkeinheit diese befolgt.

10. Verfahren eines Steuerns einer Netzwerkeinheit für ein Netzwerk, das angeordnet ist, Benutzerressourcenhosteinheiten zu umfassen, die Benutzerressourcen hosten, wobei zumindest einige der Benutzerressourcenhosteinheiten zum Anbieten der gehosteten Benutzerressourcen an andere Netzwerkeinheiten auf Empfangen einer Benutzerressourcenanfrage hin angeordnet sind und wobei das Netzwerk eine Registriereinheit (35) umfasst, die zum Beibehalten von Benutzerressourcenreferenzen zu gehosteten Benutzerressourcen, die von einer oder mehrerer der Benutzerressourcenhosteinheiten angeboten werden und zum Bereitstellen der Benutzerressourcenreferenzen in Reaktion auf Anfragen nach den Benutzerressourcenreferenzen angeordnet ist, wobei das Verfahren umfasst:
Empfangen von Benutzerressourcenanfragen von Einheiten des Netzwerks,
Verarbeiten von Benutzerressourcenanfragen, die Fremdbenutzerressourcen betreffen, die von anderen Einheiten als der Netzwerkeinheit gehostet werden,
Bereitstellen der Fremdbenutzerressourcen in Reaktion auf die Benutzerressourcenanfragen, und
wobei das Verfahren darüber hinaus ein Registrieren von Benutzerressourcenreferenzen zu Fremdbenutzerressourcen in der Registriereinheit umfasst, wobei die Benutzerressourcenreferenzen zu Fremdbenutzerressourcen die Netzwerkeinheit als die Einheit zum Empfangen von Benutzerressourcenanfragen nach den Referenzwertenfremdbenutzerressourcen anzeigt.

11. Verfahren nach Anspruch 10, weiter mit einem Abfragen einer Fremdbenutzerressourcendatenbank (100) mit den Fremdbenutzerressourcen.

12. Verfahren nach Anspruch 11, weiter mit einem Kommunizieren mit einer gegebenen Einheit, die eine gegebene Fremdbenutzerressource hostet, einem Bestimmen, ob die gegebene Fremdbenutzerressource, die in der Fremdbenutzerressourcendatenbank gespeichert ist, identisch mit der Fremdbenutzerressource ist, die von der Einheit gehostet wird, mit der eine Kommunikation stattfindet und einem Aktualisieren der gegebenen Fremdbenutzerressource in der Fremdbenutzerressourcendatenbank, die mit der Einheit verknüpft ist, mit der eine Kommunikation stattfindet, falls die gespeicherte, gegebene Fremdbenutzerressource und gehostete Fremdbenutzerressource nicht identisch sind.

13. Verfahren nach einem der Ansprüche 10 bis 12, weiter mit einem Identifizieren einer Einheit, die eine bestimmte Fremdbenutzerressource hostet, basierend auf einer Benutzerressourcenanfrage für die bestimmte Fremdbenutzerressource und einem Initiieren einer Kommunikation mit der identifizierten Einheit, um die bestimmte Fremdbenutzerressource zu erhalten.

14. Verfahren nach einem der Ansprüche 10 bis 13, wobei die Registriereinheit (35) zum Verknüpfen einer oder mehrerer Benutzerressourcenreferenzen mit einem internen Gruppenidentifikator ist, der intern für die Registriereinheit ist, und das Netzwerk darüber hinaus eine Identifikationseinheit umfasst, die zum Verknüpfen jedes der internen Gruppenidentifikatoren mit einem oder mehreren externen Gruppenidentifikatoren angeordnet ist und zum Bereitstellen eines bestimmten, internen Gruppenidentifikators in Reaktion auf ein Empfangen eines bestimmten externen Gruppenidentifikators, der mit dem bestimmten internen Gruppenidentifikator verknüpft ist, wobei das Verfahren darüber hinaus umfasst:
Erhalten von der Identifikationseinheit eines internen Gruppenidentifikators basierend auf einem externen Gruppenidentifikator und Registrieren der Benutzerressourcenreferenzen zu Fremdbenutzerressourcen in der Registriereinheit unter Verwendung des erhaltenen, internen Gruppenidentifikators.

15. Verfahren nach Anspruch 14, wobei der externe Gruppenidentifikator ein Benutzeridentifikator ist.

16. Verfahren nach einem der Ansprüche 10 bis 15, wobei die Einheiten, die Fremdbenutzerressourcen hosten, drahtlose Kommunikationsgeräte sind.

17. Verfahren nach Anspruch 16, mit einem Durchführen einer Kommunikation mit den drahtlosen Kommunikationsgeräten unter Verwendung von einem oder beidem von WAP-Push und PAOS.

18. Verfahren nach einem der Ansprüche 10 bis 17, wobei das Netzwerk gemäß den Spezifikationen des Identity Web Services Framework des Liberty Alliance Projects angeordnet ist und die Netzwerkeinheit diese einhält.

19. Computerprogrammprodukt mit einem Computerprogramm, das, wenn dieses auf einer programmierbaren Netzwerkeinheit laufengelassen wird, die programmierbare Netzwerkeinheit anpasst, das Verfahren nach einem der Ansprüche 10 bis 18 auszuführen.

## Revendications

1. Entité de réseau (101) pour un réseau que l'on agence de sorte à comprendre des entités d'hébergement de ressources d'utilisateurs qui hébergent des ressources d'utilisateurs, au moins certaines desdites entités d'hébergement de ressources d'utilisateurs étant agencées pour offrir lesdites ressources d'utilisateurs hébergées à d'autres entités de réseau lors de la réception d'une demande de ressources d'utilisateurs, et où ledit réseau comprend une entité de registre (35) agencée pour garder des références de ressources d'utilisateurs à des ressources d'utilisateurs hébergées offertes par l'une ou plusieurs desdites entités d'hébergement de ressources d'utilisateurs et pour fournir lesdites références de ressources d'utilisateurs en réponse à des demandes pour lesdites références de ressources d'utilisateurs, ladite entité de réseau comprenant:
un récepteur de demandes (104) pour recevoir des demandes de ressources d'utilisateurs à partir d'entités dudit réseau,
un processeur de demandes (105) pour traiter des demandes de ressources d'utilisateurs relatives à des ressources étrangères d'utilisateurs hébergées par d'autres entités que ladite entité de réseau, et pour fournir lesdites ressources étrangères d'utilisateurs en réponse audites demandes de ressources d'utilisateurs, et
un processeur d'enregistrement (108) agencé pour enregistrer des références de ressources d'utilisateurs à des ressources étrangères d'utilisateurs dans ladite entité de registre, où lesdites références de ressources d'utilisateurs à des ressources étrangères d'utilisateurs indiquent ladite entité de réseau en tant qu'entité pour recevoir des demandes de ressources d'utilisateurs pour les ressources étrangères d'utilisateurs référencées.

2. Entité de réseau (10) de la revendication 1, comprenant en plus une base de données (106) de ressources étrangères d'utilisateurs comprenant lesdites ressources étrangères d'utilisateurs, où ledit processeur de demandes est agencé pour interroger ladite base de données de ressources étrangères d'utilisateurs.

3. Entité de réseau de la revendication 2, comprenant en plus un dispositif de mise à jour (107) de base de données agencé pour communiquer avec une entité donnée hébergeant une ressource étrangère d'utilisateurs donnée, déterminer si la ressource étrangère d'utilisateurs donnée stockée dans ladite base de données de ressources étrangères d'utilisateurs est identique à la ressource étrangère d'utilisateurs donnée hébergée par l'entité avec laquelle une communication est effectuée, et mettre à jour la ressource étrangère d'utilisateurs donnée dans ladite base de données de ressources étrangères d'utilisateurs associée à ladite entité avec laquelle une communication est effectuée si ladite ressource étrangère d'utilisateurs donnée stockée et ladite ressource étrangère d'utilisateurs hébergée ne sont pas identiques.

4. Entité de réseau (10) de l'une des revendications 1 à 3, dans laquelle, sur la base d'une demande de ressources d'utilisateurs pour une ressource étrangère d'utilisateurs particulière, ledit processeur de demandes est agencé pour identifier une entité hébergeant ladite ressource étrangère d'utilisateurs particulière, et pour initier une communication avec ladite entité identifiée afin d'obtenir ladite ressource d'utilisateurs particulière étrangère.

5. Entité de réseau (10) de l'une des revendications 1 à 4, dans laquelle ladite entité de registre (35) est agencée pour associer une ou plusieurs références de ressources d'utilisateurs à un identifiant de groupe interne qui est interne à ladite entité de registre, et ledit réseau comprend en plus une entité d'identification (34) agencée pour associer chacun desdits identifiants de groupe internes à un ou plusieurs identifiants de groupe externes, et pour fournir un identifiant de groupe interne particulier en réponse à une réception d'un identifiant de groupe externe particulier associé audit identifiant de groupe interne particulier, ladite entité de réseau comprenant en plus:
un dispositif d'obtention pour obtenir à partir de ladite entité d'identification un identifiant de groupe interne sur la base d'un identifiant de groupe externe, où ledit processeur d'enregistrement est agencé en plus pour enregistrer lesdites références de ressources d'utilisateurs à des ressources étrangères d'utilisateurs dans ladite entité de registre en utilisant ledit identifiant de groupe interne obtenu.

6. Entité de réseau (10) de la revendication 5, dans laquelle ledit identifiant de groupe externe est un identifiant d'utilisateurs.

7. Entité de réseau (10) de l'une des revendications 1 à 6, dans laquelle lesdites entités hébergeant lesdites ressources étrangères d'utilisateurs sont des dispositifs de communication sans fil.

8. Entité de réseau (10) de la revendication 7, comprenant en plus une partie de communication pour effectuer une communication avec lesdits dispositifs de communication sans fil en utilisant l'une parmi une technique WAP Push et PAOS ou les deux.

9. Entité de réseau (10) de l'une des revendications 1 à 8, dans laquelle ledit réseau est agencé en conformité avec, et ladite entité de réseau adhère aux spécifications de la IS-WSF (Identity Web Services Framework) du projet Liberty Alliance.

10. Procédé de commande d'une entité de réseau (10) pour un réseau qui est agencé pour comprendre des entités d'hébergement de ressources d'utilisateurs qui hébergent des ressources d'utilisateurs, au moins certaines desdites entités d'hébergement de ressources d'utilisateurs étant agencées pour offrir lesdites ressources d'utilisateurs hébergées à d'autres entités de réseau lors de la réception d'une demande de ressources d'utilisateurs, et où ledit réseau comprend une entité de registre (35) agencée pour garder des références de ressources d'utilisateurs à des ressources d'utilisateurs hébergées offertes par l'une ou plusieurs desdites entités d'hébergement de ressources d'utilisateurs et pour fournir lesdites références de ressources d'utilisateurs en réponse à des demandes pour lesdites références de ressources d'utilisateurs, ledit procédé comprenant le fait de:
recevoir des demandes de ressources d'utilisateurs à partir d'entités dudit réseau,
traiter des demandes de ressources d'utilisateurs relatives à des ressources étrangères d'utilisateurs hébergées par des entités autres que ladite entité de réseau,
fournir lesdites ressources étrangères d'utilisateurs en réponse auxdites demandes de ressources d'utilisateurs, et
ledit procédé comprenant en plus l'enregistrement de références de ressources d'utilisateurs à des ressources étrangères d'utilisateurs dans ladite entité de registre, où lesdites références de ressources d'utilisateurs à des ressources étrangères d'utilisateurs indiquent ladite entité de réseau en tant qu'entité pour recevoir des demandes de ressources d'utilisateurs pour les ressources étrangères d'utilisateurs référencées.

11. Procédé de la revendication 10, comprenant en plus une interrogation d'une base de données (106) de ressources étrangères d'utilisateurs comprenant lesdites ressources étrangères d'utilisateurs.

12. Procédé de la revendication 11, comprenant en plus une communication avec une entité donnée hébergeant une ressource étrangère d'utilisateurs donnée, le fait de déterminer si la ressource étrangère d'utilisateurs donnée stockée dans ladite base de données de ressources étrangères d'utilisateurs est identique à la ressource étrangère d'utilisateurs donnée hébergée par l'entité avec laquelle une communication est effectuée, et une mise à jour de la ressource étrangère d'utilisateurs donnée dans ladite base de données de ressources étrangères d'utilisateurs associée à ladite entité avec laquelle une communication est effectuée si ladite ressource étrangère d'utilisateurs donnée stockée et ladite ressource étrangère d'utilisateurs hébergée ne sont pas identiques.

13. Procédé de l'une des revendications 10 à 12, comprenant en plus une identification d'une entité hébergeant une ressource d'utilisateurs particulière étrangère sur la base d'une demande de ressource d'utilisateurs pour ladite ressource étrangère d'utilisateurs particulière, et le fait d'initier une communication avec ladite entité identifiée afin d'obtenir ladite ressource étrangère d'utilisateurs particulière.

14. Procédé de l'une des revendications 10 à 13, dans lequel ladite entité de registre (35) est agencée pour associer une ou plusieurs références de ressources d'utilisateurs à un identifiant de groupe interne qui est à l'intérieur de ladite entité de registre, et ledit réseau comprend en plus une entité d'identification agencée pour associer chacun desdits identifiants de groupe interne à un ou plusieurs identifiants de groupe externe, et pour fournir un identifiant de groupe interne particulier en réponse à la réception d'un identifiant de groupe externe particulier associé audit identifiant de groupe interne particulier, ledit procédé comprenant en plus le fait de:
obtenir à partir de ladite entité d'identification un identifiant de groupe interne sur la base d'un identifiant de groupe externe, et enregistrer lesdites références de ressources d'utilisateurs à des ressources étrangères d'utilisateurs dans ladite entité de registre en utilisant ledit identifiant de groupe interne obtenu.

15. Procédé de la revendication 14, dans lequel ledit identifiant de groupe externe est un identifiant d'utilisateurs.

16. Procédé de l'une des revendications 10 à 15, dans lequel lesdites entités hébergeant lesdites ressources étrangères d'utilisateurs sont des dispositifs de communication sans fil.

17. Procédé de la revendication 16, comprenant le fait d'effectuer une communication avec lesdits dispositifs de communication sans fil en utilisant l'une parmi une technique WAP Push et PAOS ou les deux.

18. Procédé de l'une des revendications 10 à 17, dans lequel ledit réseau est agencé en conformité avec, et ladite entité de réseau adhère aux spécifications de la ID-WSF (Identity Web Services Framework) du projet Liberty Alliance.

19. Produit de programme informatique comprenant un programme informatique qui, lorsqu'il est exécuté sur une entité de réseau programmable, adapte l'entité de réseau programmable pour exécuter le procédé de l'une des revendications 10 à 18.
